# EUROPEAN PATENT APPLICATION

(11) **EP 4 234 193 A1**
(43) Date of publication of application: **30.08.2023**
(21) Application number: 22215828.9
(22) Date of filing: 22.12.2022
(51) Int. Cl.: B29B 17/00, B29B 17/04

(54) **THERMOPLASTIC POLYMER COMPOSITE MANUFACTURED ON THE BASIS OF WASTE OR POST-CONSUMER PIPES MADE OF THERMOPLASTIC OR CHEMICALLY HARDENED POLYMERS, INCLUDING THOSE COATED WITH A COATING PROTECTING THE INNER SURFACE OF A CHEMICALLY HARDENED POLYMER AND THE METHOD OF ITS MANUFACTURING**

(30) Priority: 28.02.2022 PL 44049122
(71) Applicant: Terlan Spolka z ograniczona odpowiedzialnoscia, 60-478 Poznan (PL)
(72) Inventor: Barczewski, Mateusz, 61-200 Poznan (PL); Szostak, Marek, 62-200 Swarzedz (PL); Andrzejewski, Jacek, 60-020 Zalasewo (PL)
(74) Representative: Tyrala, Magdalena

(57) **Abstract**

The subject of the invention is a thermoplastic polymer composite produced on the basis of waste or post-consumer pipes made of thermoplastic or chemically hardened polymers with an internal layer of a chemically hardened polymer, which constitute an important part of the composite core composition, with or without the addition of an additional thermoplastic polymer matrix and with the possibility of introducing short basalt fibres into the core material. The subject is also a method of producing a thermoplastic polymer composite.

## Description

The subject of the invention is a thermoplastic composite from post-consumer or waste pipes made of thermoplastic or chemically hardening and composite polymers, including those covered with a protective coating of chemically hardening plastics, and a method of its manufacturing.

Over the years, a gradual increase in the use of polymer materials, as well as composites manufactured with their application, has been observed, for the production of pipes intended for the transport of water. They are characterized by corrosion resistance, low thermal conductivity, high attenuation ensuring silent operation of the installation, low weight, chemical inertness and low internal surface roughness ensuring the reduced risk of installation fouling and the reduced flow resistance during the transport of water. In addition, in order to increase the mechanical and chemical resistance and improve flow parameters, some of the manufactured pipelines intended for water transport, both made of plastic and non-metallic materials, are coated on the inner surface with a layer of chemically hardening polymers, including epoxy, polyurea and polyurethane resins. The currently used methods of protecting pipelines by spraying an internal coating layer, with the purpose of increasing the stiffness of the pipe being in continuous operation, which is performed as part of maintenance or repair work, while such methods allow for the extension of trouble-free operation of the pipeline, they result in the creation of a multi-material system characterized by limited recycling possibilities. Materials of the pipeline and the coatings are permanently connected to each other, and high adhesion of the protective material applied significantly reduces their separation, even after prior fragmentation.

Currently, the most commonly used polymeric materials for the production of pipelines intended for transport of water are hard poly(vinyl chloride) (PVC) and composites manufactured with the use of glass fibres impregnated with unsaturated polyester resin. While in the case of post-consumer PVC pipelines conventional mechanical recycling technologies can be used, in the case of products covered with a chemically hardening coating it is necessary to use a multi-step separation and pre-processing procedures for the material.

One of the recycling methods for glass fibre reinforced composites (*glass fibre reinforced polymer,* GFRP) manufactured with the use of chemically hardening polymers, mainly unsaturated polyester resins, is grinding them into the form of powder and then using them as a filler in concrete compositions, but also as polymer composites with a matrix of thermoplastic or chemically hardening polymers.

In general, the use of waste or post-consumer GFRP ground into the form of powder, as a filler, results in a deterioration of the mechanical properties of the composites, compared to the unmodified polymer matrix.

Therefore, materials obtained in the process of mechanical recycling, on the basis of grinding the post-consumer products, are used not as a reinforcing element, but as a filler aimed at reducing the price of the composite made of them. The current trend is also the recovery of reinforcing fibres, including inorganic (glass and basalt) and organic (carbon) fibres in chemical recycling processes, based on dissolving the polymer matrix, or thermal processes (in the case of fibres with high thermal stability), in order to separate the fibres and reuse them in the future.

Currently, the solutions related to the disposal and recycling of post-consumer pipes, in particular multi-material pipes, are presented in the state of the art only to a small extent.

The publication CN105728441A describes a method of recycling waste polymer-metal pipes together, including a description of the device intended for the implementation of the procedure of their processing. This method consists in the mechanical separation of parts of the materials constituting the pipe and shredding them by means of a device equipped with rotating cutting elements, with the subsequent flotation separation of the metal and polymer fraction in an integrated device, directly after the cutting process.

Another example of a device for recycling bi-material polymer-aluminium pipes is presented in the description CN111282952A. With this solution, it is possible to separate the plastic and aluminium parts of the pipe subjected to the recycling process, while minimizing the risk of aluminium oxidation at time of shredding. A large number of pipelines with larger diameters are made of chemically hardening polyester composites formed by winding, therefore their disposal should be considered as a solution in the field of fibre reinforced composite recycling.

On the other hand, the authors of the solution described in US8361358B2 presented a method of recycling fibre reinforced composites (*fibre reinforced polymer,* FRP), consisting in shredding them to the selected length of fibres (fragments after grinding), with the subsequent formation of composites containing 35-40% of shredded FRP, 60-65% of unsaturated polyester resin (UP) initiated with benzoyl peroxide, 1% of thermoplastic microspheres and optionally a titanium oxide as a dye. The composites are according to the description shaped in flat moulds with simultaneously applied pressure by means of a pneumatic press, with or without the use of elevated temperature.

Another publication, US20040173239A1, describes a method of recycling fibre reinforced composites with a matrix of polyester, epoxy (EP) resin or thermoplastic polymers, with the purpose of recovering heat-resistant reinforcing glass fibres through pyrolysis of wind turbine blades or other composite products.

There are no known solutions in the state of the art describing methods of producing layered composites from materials obtained directly from post-consumer polymer pipes, including from those with an additional coating protecting their inner surface formed at time of regeneration and repair processes, in the course of their exploitation.

The polymer composite obtained according to the invention is characterized by favourable mechanical properties, including good impact resistance, while minimizing the pre-treatment procedures of the waste raw material used for its production. In addition to environmental issues and favourable mechanical properties of the products, the use of a waste filler facilitates price reduction of the manufactured composite.

The essence of the invention is a thermoplastic polymer composite manufactured on the basis of waste or post-consumer pipes made of thermoplastic or chemically hardening polymers, including those coated with a coating protecting the inner surface of a chemically hardening polymer, in which the material from waste or post-consumer pipes, in the shredded or powdered form, constitutes from 10 to 100% by weight of the core in relation to the applicable reinforcing fibres and auxiliary agents. However, in the case of using the shredded waste or post-consumer composite pipes with a matrix of chemically hardening resins reinforced with fibres, it is 5 to 90% by weight of the core in relation to the thermoplastic polymer matrix.

Preferably, the milled material used for the production of the composite core, originating from post-consumer or waste polymer or composite pipes, is made of pipes containing on their inner surface a coating of a chemically hardening polymer, including polyurea, polyurethane or polyester resin, whereas the coating is not separated, i.e. the coating in the technological line after the shredding process is not subjected to separation processes.

It is envisaged that the thermoplastic polymer composite may be manufactured with a thermoplastic polymer matrix, including polypropylene (PP), poly(vinyl chloride) (PVC), polyoxymethylene (POM), polyamide (PA) or polyethylene (PE).

Particularly preferably, in the case of materials based on the pipes manufactured from thermoplastic cross-linked materials, or fibre-reinforced thermoplastic polymer pipes, the thermoplastic polymer composite contains an additional thermoplastic polymer in the form of a powder, preferably with a grain size in the range of 100-500 µm, or granules characterized by a melt flow rate MFR in the range of 1-100 g/10 min. (preferably 10-50 g/10 min.), determined with a load of 2.16 kg in accordance with the measurement temperature described in ISO 1133, with the amount of 5 to 90% of the milled material from the shredded composite pipes, or for the milled material from thermoplastic pipes with the addition of a thermoplastic polymer with confirmed miscibility with the fraction of thermoplastic polymer constituting the pipe material, the content of which exceeds 50% by weight in it, in the amount of up to 20% by weight in relation to the milled material from the shredded portion of the pipeline.

In the process of manufacturing the thermoplastic polymer composite, which includes shredded post-consumer or waste pipe fragments made of polymeric materials, including poly(vinyl chloride) (PVC), polyethylene (PE), polymer composites reinforced with glass fibre (FRP) made on the matrix of unsaturated polyester or epoxy resin, internally reinforced by means of a coating of a chemically hardening polymer, including polyurea, polyurethane or epoxy resin or their composites, the following steps can be distinguished.

**Step I** includes the process of preliminary cleaning (mechanical and/or in a water bath) of pipe fragments intended for the production of composites.

In **step II** pipeline sections are shredded by mechanical processing into fragments of a size that allows them to be introduced into the cutting chamber of a low-speed knife mill.

**Step III** assumes the grinding of pipe fragments by means of a low-speed mill equipped with a grinding screen with a mesh size of 2-15 mm, preferably 3-5 mm for pipes made of thermoplastic materials, and 2-15 mm, preferably 8-10 mm, for grinding the pipes made of chemically hardening resins saturated with continuous fibres. The shredded pipes in the form of milled material with a particle size resulting from the applied geometry of the cutting system of the low-speed mill, depending on the composition of the material, are the base for the production of the layered composite core in subsequent stages.

In **step IV** the milled materials made from the pipes can be subjected to two variants of preliminary preparation of the composition, depending on the material composition.

**IVa:** The milled materials from the pipes made of thermoplastic polymers, without subjecting the coating material, if present, to the separation process, having no reinforcing fibres in its composition, are mixed mechanically, preferably with the use of mechanical mixers intended for the preparation of loose compositions, with short basalt fibres having a length of 2 to 15 mm, with the mass concentration of fibres in relation to the milled thermoplastic material ranging from 5 to 50%, with the possible introduction of an additional thermoplastic polymer in the form of powder or granulate having a confirmed miscibility with the fraction of the thermoplastic polymer of the pipe material, the content of which exceeds 50% by weight in it, in the amount of up to 20% by weight in relation to the milled material from the shredded fragment of the pipeline, and then they are subjected to a drying process at a temperature of 40°C to 80°C for 3 to 24 hours. The introduction of an additional thermoplastic polymer is justified in the case of pipelines made of cross-linked materials, including by radiation or chemical methods.

**IVb:** The milled materials from the pipes made of chemically hardening polymers reinforced with fibres, without subjecting the coating material, if present, to a separation process, are mixed mechanically, preferably with the use of mechanical mixers intended for the preparation of loose compositions, with a thermoplastic polymer, preferably with polypropylene (iPP), polyoxymethylene (POM), hard poly(vinyl chloride) (PVC), polyamide (PA) polyethylene (PE), in the form of a powder, preferably having a grain size in the range of 100-500 µm, or granules with melt flow rate MFR in the range of 1-100 g/10 min. ( preferably 10-50 g/10 min.), determined for the load of 2.16 kg in accordance with the measurement temperature described in the PN-EN ISO 1133 standard, in the amount of 5 to 90% by weight in relation to the milled material from the shredded composite pipes, and then they are subjected to a drying process in a temperature from 40°C to 80°C for 3 to 24 hours.

The prepared compositions are dried at a temperature of 40°C to 80°C for 3 to 24 hours, and then pressed.

Preferably, the process of pressing the composites is carried out in two steps. Compositions prepared according to the previous procedure in **Step V** may be introduced into a steel mould, preferably coated with a waxes-based or silicone-based release agent, at least tripartite, with dividing planes coinciding with the surfaces of the moulded product, preferably a flat plate with transverse dimensions at least ten times greater than the thickness, in a mass amount calculated on the basis of the composition density analysis related to the theoretical mass of the product formed in a mould with a selected geometry in the range from 1 to 1.30. Then, the mould is closed, preferably with prior insertion of Teflon foil spacers in the dividing planes representing the upper and lower part of the product.

In the subsequent **step VI** the material placed in the mould is precompressed using a hydraulic press. The pressing process takes place at a temperature exceeding min. 20°C plastic flow temperature of the fragmented pipe material (variant **IVa**), or of the thermoplastic polymer material mixed with the milled material from a chemically hardened fibre-reinforced pipe (variant **IVb**). In the first step of pressing, the material is heated in the period ranging from 30 seconds to 5 minutes, with the minimum pressing pressure ensuring contact of the press plates with the mould and stable heat transfer (maximum pressure 3 MPa), and then in the period ranging from 30 seconds to 5 minutes at an increased pressing pressure, preferably in the range from 10 to 30 MPa.

In **step VII,** after releasing the pressure, the mould is removed from the working space of the press and then opened in the dividing plane, revealing the upper part of the product, the Teflon foil is removed, and on the plasticized portion of the composite material, constituting the core, of the composite made from the milled material of thermoplastic or chemically hardening pipes reinforced with glass fibres, together with the respective additives and fillers introduced in accordance with the procedure described in **step IV,** a reinforcing fabric is introduced, made of continuous fibres, including glass, basalt or carbon fibres, with a basis weight of 50 to 500 g/m² (preferably 150-200 g/m²), having transverse dimensions increased by a minimum of 10 mm in relation to the dimensions of the product in the dividing plane of the mould. The mould is then closed and rotated, and the insertion process of the reinforcing fibre fabric is repeated to form a reinforcing layer in the lower part of the product, in the same way as in the upper part. Operations provided in **step VII** should be performed in the time when the temperature of the composite material constituting the core does not drop below the plastic flow temperature of the thermoplastic polymer fraction, or in the case of a mould containing a separate heating system, in a time not exceeding 3 minutes.

In the next step, constituting **step VIII,** the steel mould is once again inserted to the working space of the press and the pressing process is continued for the period ranging from 30 seconds to 15 minutes (preferably 1-3 minutes), at a temperature not lower than that used in **step VI,** with a pressing pressure of 5 to 70 MPa (preferably 10-30 MPa). After the pressing process is completed, the mould is removed from the working space of the press, and the mould is cooled by means of forced air circulation or with the application of thermostatic liquid-cooled plates, preferably with the simultaneous application of force in the direction of pressing, and after reaching the ambient temperature, the product is removed from the mould and the excess reinforcing fabric not saturated with the core material is removed mechanically.

A characteristic feature of the shaping process of the composite is the use of a two-step composite forming process, with the inclusion of the process of initial pressing in excess to the volume of the mould cavity with the core material, containing in its composition the waste material from post-consumer or post-production polymer pipes, in tripartite moulds at minimum, with postpressing of the product after this process, which is preceded by the introduction of the reinforcing fabrics in the defined time and temperature conditions. The application of the presented procedure allows for the production of a thin-walled layered composite with the planes reinforced with fabrics, while maintaining high cohesion of the core ensured by the presence of reinforcing fibres; short basalt fibres, additionally introduced in the case of implementation of the procedure **IVa** for a core based on the shredded thermoplastic pipes, or fibres derived from a shredded composite pipe structure in the case of the procedure **IVb.**

### Example 1.

The primary material used in the process is poly(vinyl chloride) (PVC) pipes with a coating on the inner wall. The coating is a polyurea (PUA) based composite material applied to the inner surface of the pipe in the centrifugal spraying process. The pipes were subjected to shredding by means of a low-speed knife mill, equipped with screens to obtain the milled material with a maximum fraction of 5 mm. Then, the milled material with hard PVC and PUA in its composition, with a PVC:PUA mass ratio of 3:1 resulting from the structure of the product subject to recycling, is dried by means of a chamber dryer at a temperature not exceeding 70°C. PVC-PUA milled material is then mechanically mixed with staple basalt fibres (BF) 3-8 mm long, dosing to the PVC-PUA mixture 10, 20, 30, 40 % in weight of fibre filler, respectively. Portions of the material in the amount of 60 g are introduced into a tripartite steel mould with spacers made of Teflon foil and dimensions of 100 x 100 x 4 mm. The moulds are placed successively on the working table of the hydraulic press, heated to 190°C, and then initial pressing is made with heating the input material at duration of 90 s and with the working pressure in the hydraulic system of the press of 1 MPa, after which the pressing pressure is increased to 20 MPa, until a total heating time of 180 s is obtained. Then, after pressure from the hydraulic system of the press is released, the mould is removed from the working space of the press, and within 30 s the mould is opened by removing the upper stamping plate together with the Teflon foil, the basalt fabric with a weight of 200 g/m² is inserted, and it is reinstalled to its original position and then the operation is repeated for the lower stamping plate, having previously rotated the press mould by 180°. The tripartite form, after the introduction of basalt fabrics with dimensions of 150 x 150 mm adjacent to the flat surface of the product with dimensions of 100 x 100 mm on both sides, is introduced into the working space of the press and the pressing process takes place again for the period of 120 s and at a pressure of 20 MPa. After this time, the mould is removed from the working space of the press and, after loading it with a steel cooling plate on a separate stand and exerting a force of 50 N, it is cooled down to the ambient temperature, with simultaneously applied forced circulation of cool air. The composite products obtained in this way, after the excess fabric is removed to the nominal size of the sample of 100 x 100 mm, constitute the finished composite product.

From a composite board with dimensions of 100 x 100 x 4 mm, samples were prepared for testing by the mechanical treatment method in accordance with the guidelines described in the PN-EN-ISO-527 and PN-EN-ISO-179 standards and subjected to the assessment of mechanical properties, including measurement of tensile strength and Charpy impact test, in accordance with the procedure defined in the specified standards. The results of the mechanical tests are summarized in Table 1.

**Table 1.**

| **Strength properties of the samples were assessed in a static tensile test and Charpy impact test method** | | | | |
|---|---|---|---|---|
| **Sample name** | **Tensile strength** | **Longitudinal modulus of elasticity** | **Impact strength** | **Maximum force under shock load** |
| | [MPa] | [MPa] | [kJ/m²] | [N] |
| Ref | 3.04 ± 0.75 | 451 ± 87 | 0.95 ± 0.15 | 39.62 ± 5.91 |
| 0 | 5.09 ± 0.59 | 581 ±44 | 5.81 ± 1.76 | 117.95 ± 9.03 |
| 20 | 5.46 ± 0.39 | 910 ± 53 | 8.52 ± 2.79 | 100.90 ± 9.60 |
| 30 | 8.33 ± 1.70 | 1250 ± 41 | 11.68 ± 3.24 | 92.65 ± 15.24 |
| 40 | 6.49 ± 1.46 | 1150 ± 198 | 8.04 ± 1.25 | 67.63 ± 2.22 |

The introduction of short basalt fibres to the core of a layered composite made of a PVC-PUA mixture obtained by shredding a polymer pipe with a protective coating resulted in an improvement of mechanical properties. Particularly favourable effects were noted in the case of impact resistance analysis for layered composites modified with a content of more than 20 % in weight of short basalt fibres. The advantage of introducing short fibres into the PVC-PUA matrix was the increased cohesion of the composite core.

### Example 2.

Post-consumer fragments of a composite pipeline with a diameter of 580 mm and with a matrix made of unsaturated polyester resin reinforced with glass fibres, protected on its inner side with a layer of a composite polyurea coating, after prior mechanical cleaning in a water bath and subsequent drying, are cut into fragments using a mechanical saw, and then shredded using a low-speed mill equipped with a grinding screen with a mesh diameter of 10 mm. The shredded fragments of the composite pipe were characterized by maximum dimensions of the milled material of 70 mm and the average aspect ratio for the fraction having the size less than 10 mm, L/D=24. The unscreened mixed milled material is isotactic polypropylene, in the form of a powder with a grain size not exceeding 500 µm and a melt flow index MFI = 28 g/10 min (230°C; 2.16 kg), in quantities of polymer:milled material 20:40, 25:35, 30:30, 40:20 and 50:10 g, which translates into the mass content of the filler 33, 41, 66 and 83 % in relation to the polypropylene matrix. After making the weighings, the compositions are mixed using a mechanical mixer intended for the preparation of loose compositions, at a rotational speed of the mixing element of 120 rpm, for 5 minutes. The compositions prepared in this way are placed in a tripartite steel mould, consisting of two flat plates and a frame placed between them with the dimensions of the moulding cavity 4 x 100 x 100 mm. After closing the form, it is introduced into the working space of the hydraulic press, and then it is initially pressed for 2 min. 30 s, at temperature of 190°C and at a pressing pressure of 2 MPa, and then with the pressure of 30 MPa for 1 min. After this time, the mould is removed from the working space of the press and within 30 s the upper moulding plate is removed one by one, and a sheet of basalt fabric with a basis weight of 300 g/m² and dimensions of 140 x 140 mm is placed on the exposed part of the plasticized iPP-FGRP/PUA composition, and then, after closing and turning the mould by 180°, this operation is repeated for the lower part of the product. Then, the mould is closed and placed in the working space of the hydraulic press, after which the second step of the pressing process is carried out for the period of 2 minutes, at a pressure of 30 MPa and temperature of 190°C. After this time, the mould is removed from the working space of the press and placed on the hydraulic press tables cooled to temperature of 15°C, and after reaching the pressing pressure of 10 MPa, it is left under pressure until it reaches ambient temperature. After being removed from the mould and the mechanical removal of excess basalt fabrics, the board is conditioned for 7 days.

The layered composite consisting of the basalt fabrics saturated with the polypropylene matrix in the outer parts of the product and the core made of the composite containing various concentrations of shredded fragments of a pipe made of GFRP, with a dominant geometry of fragments characterized by an increased aspect ratio, is subjected to a mechanical treatment process in order to produce samples with the dimensions described in PN-EN-ISO-527 and PN-EN-ISO-179 standards. Then, the material samples were subjected to the assessment of mechanical properties, including the measurement of tensile strength and the Charpy impact test, in accordance with the procedure defined in the specified standards. The results of the mechanical tests are summarized in Table 2.

**Table 2.**

| **Strength properties of the samples were assessed in a static tensile test and Charpy impact test method** | | | |
|---|---|---|---|
| **Sample name** | **Flexural strength** | **Modulus of elasticity at bending** | **Impact strength** |
| | [MPa] | [MPa] | [kJ/m²] |
| 41/0 | 24.3 ± 3.8 | 1210 ± 245 | 6.70 ± 1.37 |
| 33BF | 35.2 ± 1.2 | 1150 ± 76 | 6.94 ± 0.25 |
| 41BF | 34.7 ± 4.2 | 1273 ±189 | 6.66 ± 0.23 |
| 66BF | 29.3 ± 5.1 | 1310 ± 126 | 4.17 ± 1.48 |
| 83BF | 24.5 ± 4.1 | 1310 ± 219 | 6.72 ± 2.66 |
| Designation: % by weight /outer layer (basalt fabric: BF; none: 0) | | | |

The use of basalt fabrics on the external surfaces of the pressed boards allowed to increase the flexural strength, when compared to 380 of the sample pressed from the mixture of polypropylene with the milled material made from a polyester-glass pipe with a polyurea coating (41/0); in addition, when the share of the milled material from the pipes with glass fibres in its core increases, a beneficial increase in the stiffness of the composite products is noted, without simultaneously any significant decrease in impact strength.

## Claims

1. The thermoplastic polymer composite manufactured on the basis of waste or post-consumer pipes made of thermoplastic or chemically hardening polymers, including those covered with a coating protecting the inner surface of a chemically hardening polymer, **characterized in that** the material from waste or post-consumer pipes in the form of milled material or powder constitutes from 10 to 100% by weight of the core in relation to the used reinforcing fibres and auxiliary agents, and in the case of waste or post-consumer shredded composite pipes with a chemically hardening resin matrix reinforced with fibres, it is from 5 to 90% by weight of the core in relation the thermoplastic polymer matrix.

2. The thermoplastic polymer composite according to claim 1 **characterised in that** the milled material used for the production of the composite core, coming from post-consumer or waste polymer or composite pipes, is manufactured from the pipes containing on their inner surface a coating of a chemically hardening polymer, including polyurea, polyurethane or polyester resin, whereas the coating is not separated.

3. The thermoplastic polymer composite according to claim 1 or 2 **characterized in that** it is made on the thermoplastic polymer matrix, including polypropylene (PP), poly(vinyl chloride) (PVC), polyoxymethylene (POM), polyamide (PA), or polyethylene (PE).

4. The thermoplastic polymer composite according to claim 1, 2 or 3, **characterised in that** in the case of materials based on the pipes manufactured from thermoplastic cross-linked materials, or fibre-reinforced thermoplastic polymer pipes, it contains an additional thermoplastic polymer in the form of powder, preferably with a grain size in the range of 100-500 µm, or granules **characterized by** a melt flow rate MFR in the range of 1-100 g/10 min. (preferably 10-50 g/10 min.), determined with the load of 2.16 kg in accordance with the measurement temperature described in ISO, in the amount of 5 to 90% of the milled material from the shredded composite pipes, or of milled material from the thermoplastic pipes with the addition of a thermoplastic polymer having a confirmed miscibility with the fraction of a thermoplastic polymer constituting the pipe material, the content of which exceeds 50% by weight, in the amount of up to 20% by weight in relation to the milled material from the shredded portion of the pipeline.

5. A method for manufacturing a thermoplastic polymer composite according to the claim 1, in which in the first place, the process of mechanical cleaning, or cleaning in a water bath, is carried out for the pipes intended for the production of composites, then initial shredding using mechanical processing methods into fragments having a size that allows them to be introduced into a low-speed knife mill with the subsequent grinding by means of a low-speed mill equipped with a grinding screen with a mesh size of 2-15 mm, preferably 3-5 mm, for the pipes made of thermoplastic materials, and 2-15 mm, preferably 8-10 mm, in the case of grinding the pipes made of chemically hardening resins saturated with continuous fibres, physical mixing, preferably using mechanical mixers intended for the preparation of loose compositions with polymers, basalt short fibres, drying the composition at a temperature of 40°C to 80°C in the period from 3 to 24 hours, and pressing.

6. A method for producing a thermoplastic polymer composite according to claim 5 **characterized in that** the process of pressing the composites is carried out in two steps, and the compositions containing the shredded fragments of pipes or a filler and an additional polymer are introduced into a steel mould, preferably coated with a waxes-based or silicone-based release agent, which is at least tripartite, with division planes constituting the surfaces of the moulded product, preferably a flat plate with transverse dimensions at least ten times greater than the thickness, in a mass amount calculated on the basis of the density analysis for the composition in relation to the theoretical weight of the product shaped in a mould with a selected geometry in the range of 1 to 1.30, after which the mould is closed, preferably with prior insertion of foil spacers at division planes representing the upper and lower part of the product, and then, after placing the mould in the working space of the hydraulic press, the material is subjected to the initial pressing at a temperature exceeding min. 20°C plastic flow temperature of the thermoplastic material having the largest share in the composition, for the period ranging from 30 seconds to 5 minutes, with the minimum pressing pressure ensuring stable heat transfer from the heating tables of the press to the steel mould, and then for the period ranging from 30 seconds to 5 minutes with an increased pressing pressure value, preferably in the range of 10 to 30 MPa, and thereafter the mould, after releasing the pressure, is removed from the working space of the press and opened in the dividing plane, revealing the upper part of the product, a reinforcing fabric made of continuous fibres is placed on the plasticised portion of the composite material, then the mould is closed and rotated, and the operation of introducing the fabric made of reinforcing fibres is repeated in order to create a reinforcing layer in the lower part of the product in the same way as in the upper part of the product, then the material is subjected to the second step of pressing for the period ranging from 30 seconds to 15 min., preferably 1-3 min., at a temperature not lower than that used in the first step of the process and at a pressing pressure ranging from 5 to 70 MPa, preferably 10-30 MPa, after which, when the pressing process is completed, the mould is removed from the working space of the press and cooled by means of a forced air circulation or with the use of thermostatic liquid-cooled plates, preferably with simultaneous application of force in the pressing plane, and after reaching the ambient temperature, the product is removed from the mould and the excess reinforcing fabric not saturated with the core material is mechanically removed.

7. A method for producing a thermoplastic polymer composite according to claim 6 **characterized in that** the reinforcing fibre fabric, which is inserted as the outer layer between the first and second pressing steps, is made of glass, basalt or carbon fibres with a basis weight of 50 to 500 g/m², preferably 150-200 g/m², and the dimensions of applied sheet are greater than the projection of the product in the dividing plane of the mould by at least 10 mm.

8. A method for producing a thermoplastic polymer composite according to claim 6 or 7 **characterized in that** the insertion of the fabrics into the mould between the first and second pressing step takes place in the time when the temperature of the composite material constituting the core does not fall below the plastic flow temperature, or in the case of a mould containing a separate heating system in a time not exceeding 3 minutes.

9. The method according to claim 5-8 **characterized in that** the manufactured composite is subjected to the conditioning process at ambient temperature for at least 48 hours.
